# EUROPEAN PATENT APPLICATION

(11) **EP 4 660 793 A1**
(43) Date of publication of application: **10.12.2025**
(21) Application number: 24762874.6
(22) Date of filing: 09.01.2024
(51) Int. Cl.: G06F 9/445

(54) **METHOD FOR ACCESSING VIRTUAL-WORLD APPLICATION, AND RELATED PRODUCT**

(30) Priority: 28.02.2023 CN 202310179644
(71) Applicant: Huawei Cloud Computing Technologies Co., Ltd., Guiyang, Guizhou 550025 (CN)
(72) Inventor: CHEN, Pu, Guiyang, Guizhou 550025 (CN)
(74) Representative: Goddar, Heinz J.
(86) International application number: PCT/CN2024/071377
(87) International publication number: WO 2024/179191

(57) **Abstract**

This application discloses a method for accessing a virtual-world application and a related product. The method may be applied to an application access apparatus. The application access apparatus logs in to a virtual-world application account of a user based on authentication information of the user, runs a first sub-application in the virtual-world application according to a first operation instruction of the user, and sends a media stream of the first sub-application to a client corresponding to the user. Then, the application access apparatus switches from the first sub-application to a second sub-application in the virtual-world application through an application switching interface of the first sub-application according to a second operation instruction of the user, runs the second sub-application, and sends a media stream of the second sub-application to the client corresponding to the user. According to the foregoing method, user experience can be improved.

## Description

This application claims priority to Chinese Patent Application No. 202310179644.0, filed with the China National Intellectual Property Administration on February 28, 2023 and entitled "METHOD FOR ACCESSING VIRTUAL-WORLD APPLICATION AND RELATED PRODUCT", which is incorporated herein by reference in its entirety.

### TECHNICAL FIELD

This application relates to the field of cloud computing technologies, and in particular, to a method for accessing a virtual-world application and a related product.

### BACKGROUND

With development of cloud computing technologies, a user may run a virtual-world application on cloud resources. To be specific, the virtual-world application is run on the cloud resources, and a media stream of the application is transmitted to a client corresponding to the user; and the client presents a corresponding virtual world to the user, so that the user can experience the virtual world.

### SUMMARY

This application provides a method for accessing a virtual-world application and a related product, to improve user experience.

According to a first aspect, this application provides a method for accessing a virtual-world application. The method may be applied to an application access apparatus. The application access apparatus logs in to a virtual-world application account of a user based on authentication information of the user, runs a first sub-application in the virtual-world application according to a first operation instruction of the user, and sends a media stream of the first sub-application to a client corresponding to the user. Then, the application access apparatus switches from the first sub-application to a second sub-application in the virtual-world application through an application switching interface of the first sub-application according to a second operation instruction of the user, runs the second sub-application, and sends a media stream of the second sub-application to the client corresponding to the user.

In the technical solution provided in this application, the application access apparatus supports the user to directly switch from one sub-application to another sub-application in the virtual-world application for access, so that when the user wants to access the another sub-application, the user does not need to first exit the sub-application and then log in to the another sub-application. This can improve user experience.

In a possible implementation of the first aspect, the application access apparatus includes a running management apparatus and at least one cloud rendering node. That the application access apparatus switches from the first sub-application to a second sub-application in the virtual-world application through the application switching interface of the first sub-application includes: A first cloud rendering node in the at least one cloud rendering node sends a notification message to the running management apparatus by invoking the application switching interface of the first sub-application, where the first sub-application is run on the first cloud rendering node, and the client is connected to the first sub-application on the first cloud rendering node. The running management apparatus determines the second sub-application based on the notification message, deploys the second sub-application on a second cloud rendering node in the at least one cloud rendering node, and switches a sub-application connected to the client from the first sub-application to the second sub-application. That the application access apparatus runs the second sub-application, and sends the media stream of the second sub-application to the client corresponding to the user includes: The second cloud rendering node runs the second sub-application, and sends the media stream of the second sub-application to the client.

In a possible implementation of the first aspect, the application switching interface of the first sub-application is configured by an application management apparatus for the first sub-application. The application access apparatus can conveniently switch from the first sub-application to the second sub-application through the application switching interface.

In a possible implementation of the first aspect, the first sub-application and the second sub-application are developed by different application developers. It should be understood that an application developed by an application developer has exquisite images, and is natural and smooth to switch. Therefore, the first sub-application and the second sub-application are high-quality applications, and the user can obtain good experience when accessing the first sub-application and the second sub-application. In addition, the first sub-application and the second sub-application are developed by the different application developers. This means that total development time of the first sub-application and the second sub-application is short, so that the virtual-world application can be released and used more quickly.

In a possible implementation of the first aspect, the first sub-application and the second sub-application are applications that are reviewed by an application management apparatus based on at least one of application content, application stability, and a resource required for application running. It should be understood that each sub-application in the virtual-world application may be more standardized by reviewing the application developed by the application developer, so that the virtual-world application built based on a plurality of sub-applications is a high-quality application.

In a possible implementation of the first aspect, before the running management apparatus switches a sub-application connected to the client from the first sub-application to the second sub-application, the running management apparatus obtains a configuration of the second sub-application, and determines, based on the configuration, at least one of whether the user has permission to access the second sub-application and fees for accessing the second sub-application by the user. The configuration is obtained by configuring the second sub-application by the application management apparatus based on configuration information selected or entered by an application developer corresponding to the second sub-application.

According to a second aspect, this application provides a method for developing a virtual-world application. The method may be applied to an application management apparatus. The application management apparatus obtains a plurality of applications developed by a plurality of application developers, and then registers at least one of the plurality of applications as a sub-application in the virtual-world application. The virtual-world application allows a user to switch from any sub-application to another sub-application for access.

In the technical solutions provided in this application, the application management apparatus supports the plurality of application developers to collaboratively develop the virtual-world application. In other words, the application developers develop sub-applications in the virtual-world application. Therefore, scenes used in the sub-application may be designed and produced by a professional art designer, and scene logic used to implement switching between scenes may be compiled by a professional programmer, so that the developed virtual-world application has more exquisite images, and is more natural and smoother to switch. Correspondingly, the developed virtual-world application has higher quality. Further, each application developer needs to be responsible for developing only a part of the virtual-world application. This can improve efficiency of developing the virtual-world application, and is applicable to development of a large-scale virtual-world application.

In a possible implementation of the second aspect, the application management apparatus loads a space interconnection software development kit (software development kit, SDK) to any sub-application in the virtual-world application. The space interconnection SDK includes an application switching interface, and the interface is used by the user to switch from the any sub-application to the another sub-application for access.

It should be understood that, when the user wants to access another sub-application after accessing a sub-application for a period of time, the user may directly switch from the sub-application to the another sub-application in the foregoing manner, and the user does not need to perform a related step of first exiting the sub-application and then logging in to the another sub-application. That is, the foregoing implementation can improve user experience.

In a possible implementation of the second aspect, that the application management apparatus registers the at least one of the plurality of applications as the sub-application in the virtual-world application includes: The application management apparatus reviews each of the plurality of applications based on at least one of application content, application stability, and a resource required for application running, and registers any application as the sub-application in the virtual-world application when the any application is approved.

In the foregoing implementation, each sub-application in the virtual-world application may be more standardized, so that the virtual-world application built based on a plurality of sub-applications is a high-quality application.

In a possible implementation of the second aspect, the application management apparatus determines configuration information selected or entered by an application developer corresponding to the sub-application, and configures the corresponding sub-application based on the configuration information. The configuration information includes at least one of a range of a user who can access the sub-application and a payment mode in which the user accesses the sub-application.

According to a third aspect, this application provides an application access apparatus. The application access apparatus includes a running management apparatus and at least one cloud rendering node. The running management apparatus is configured to log in to a virtual-world application account of a user based on authentication information of the user. The at least one cloud rendering node is configured to: run a first sub-application in a virtual-world application according to a first operation instruction of the user, and send a media stream of the first sub-application to a client corresponding to the user; switch from the first sub-application to a second sub-application in the virtual-world application through an application switching interface of the first sub-application according to a second operation instruction of the user; and run the second sub-application, and send a media stream of the second sub-application to the client corresponding to the user.

In a possible implementation of the third aspect, the at least one cloud rendering node includes a first cloud rendering node and a second cloud rendering node. The first cloud rendering node is configured to send a notification message to the running management apparatus by invoking the application switching interface of the first sub-application, where the first sub-application is run on the first cloud rendering node, and the client is connected to the first sub-application on the first cloud rendering node. The running management apparatus is configured to: determine the second sub-application based on the notification message, deploy the second sub-application on the second cloud rendering node in the at least one cloud rendering node, and switch a sub-application connected to the client from the first sub-application to the second sub-application. The second cloud rendering node is configured to: run the second sub-application, and send the media stream of the second sub-application to the client.

In a possible implementation of the third aspect, the first sub-application and the second sub-application are developed by different application developers.

In a possible implementation of the third aspect, the first sub-application and the second sub-application are applications that are reviewed by an application management apparatus based on at least one of application content, application stability, and a resource required for application running.

In a possible implementation of the third aspect, the running management apparatus is further configured to: obtain a configuration of the second sub-application, determine, based on the configuration, at least one of whether the user has permission to access the second sub-application and fees for accessing the second sub-application by the user. The configuration is obtained by configuring the second sub-application by the application management apparatus based on configuration information selected or entered by an application developer corresponding to the second sub-application.

According to a fourth aspect, this application provides an application management apparatus. The application management apparatus includes an obtaining module, a registration module, and a loading module. The obtaining module is configured to obtain a plurality of applications developed by a plurality of application developers. The registration module is configured to register at least one of the plurality of applications as a sub-application in a virtual-world application. The virtual-world application allows a user to switch from any sub-application to another sub-application for access.

In a possible implementation of the fourth aspect, the application management apparatus further includes a loading module. The loading module is configured to load a space interconnection SDK to the any sub-application in the virtual-world application. The space interconnection SDK includes an application switching interface, and the interface is used by the user to switch from the any sub-application to the another sub-application for access.

In a possible implementation of the fourth aspect, the registration module is configured to: review each of the plurality of applications based on at least one of application content, application stability, and a resource required for application running, and register any application as the sub-application in the virtual-world application when the any application is approved.

In a possible implementation of the fourth aspect, the application management apparatus further includes a configuration module. The configuration module is configured to: determine configuration information selected or entered by an application developer corresponding to the sub-application, and configure the corresponding sub-application based on the configuration information. The configuration information includes at least one of a range of a user who can access the sub-application and a payment mode in which the user accesses the sub-application.

According to a fifth aspect, this application provides a cloud service system, including the application management apparatus described in any one of the fourth aspect and the implementations of the first aspect, and the application access apparatus described in any one of the third aspect and the implementations of the third aspect.

According to a sixth aspect, this application provides a computing device cluster. The computing device cluster includes at least one computing device, and each computing device includes a processor and a memory. A processor of the at least one computing device is configured to execute instructions stored in a memory of the at least one computing device, to enable the computing device cluster to perform some or all of the methods described in the first aspect and/or the second aspect.

According to a seventh aspect, this application provides a computer program product including instructions. The computer program product may be software or a program product that includes the instructions and that can run on a computing device or can be stored in any usable medium. When the computer program product runs on at least one computing device, the at least one computing device is enabled to perform some or all of the methods described in the first aspect and/or the second aspect.

According to an eighth aspect, this application provides a computer-readable storage medium. The computer storage medium stores computer program code. When the computer program code is executed by a computing device, the computing device performs some or all of the methods described in the first aspect and/or the second aspect.

### BRIEF DESCRIPTION OF DRAWINGS

FIG. 1 is a diagram of an application scenario of an application management apparatus according to an embodiment of this application;
FIG. 2 is a schematic flowchart of a method for developing a virtual-world application according to an embodiment of this application;
FIG. 3 is a diagram of a structure of an application access apparatus according to an embodiment of this application;
FIG. 4 is a diagram of an application scenario of an application access apparatus according to an embodiment of this application;
FIG. 5A and FIG. 5B are a schematic flowchart of a method for accessing a virtual-world application according to an embodiment of this application;
FIG. 6 is a diagram of a structure of an application management apparatus according to an embodiment of this application;
FIG. 7 is a diagram of a structure of a cloud service system according to an embodiment of this application;
FIG. 8 is a diagram of a structure of a computing device according to an embodiment of this application; and
FIG. 9 is a diagram of a structure of a computing device cluster according to an embodiment of this application.

### DESCRIPTION OF EMBODIMENTS

The following describes technical solutions provided in this application with reference to accompanying drawings.

A virtual world is a network world in which users can live and communicate with each other based on virtual avatars as carriers in a computer simulation environment. The virtual world consists of a plurality of scenes. The scene in the virtual world includes scene assets and scene logic. The scene assets include a character and an article in a scene, for example, a stage, a singer, and an audience in a virtual concert scene. The scene logic is used to implement switching between different scenes. For example, in a virtual concert, stage effect to be presented when a singer starts to sing is different from stage effect to be presented when the singer stops singing. How to achieve this objective needs to be defined based on the scene logic.

In recent years, applications related to a virtual world are gradually becoming scene-based and life-oriented, so that the entire industry poses higher requirements on quality of virtual-world applications (especially presentation effect of a scene), and time and costs consumed for developing the virtual-world applications. Apparently, simple scenes built by users cannot meet the requirements of the industry for the virtual-world applications.

An embodiment of this application provides a method for developing a virtual-world application. The method supports a plurality of application developers to collaboratively develop a virtual-world application. In a development process, various scenes included in the virtual-world application are designed and produced by a professional art designer, and scene logic used to implement switching between the scenes is compiled by a professional programmer. Therefore, compared with a scene created by a user of a virtual-world application by using a tool (for example, a preset 3D model) provided by the application in the conventional technology, a scene created by using the method provided in this embodiment of this application has more exquisite images, and is more natural and smoother to switch. Correspondingly, the developed virtual-world application has higher quality. In addition, when the virtual-world application is developed by using the method provided in this embodiment of this application, each application developer needs to be responsible for developing only a part of the virtual-world application. Compared with the conventional technology in which a single application developer completes development of the entire virtual-world application, in the method in this embodiment of this application, efficiency of developing the virtual-world application can be improved.

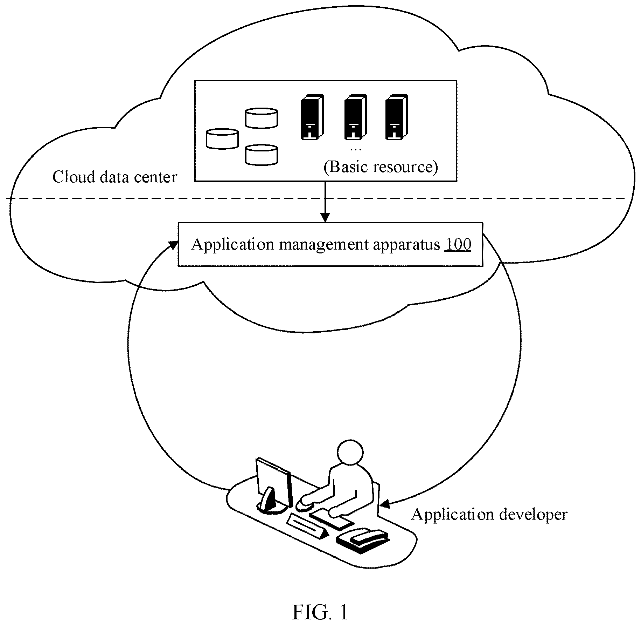

The method for developing the virtual-world application provided in this embodiment of this application may be performed by an application development apparatus. In some embodiments, the application development apparatus may be deployed in a cloud data center by a cloud service provider, and the cloud data center includes a large quantity of basic resources (for example, computing resources, storage resources, and network resources). As shown in FIG. 1, the cloud service provider provides a function of an application management apparatus 100 as a cloud service for a tenant (for example, an application developer). When using the cloud service, different application developers may provide applications developed by the application developers to the application management apparatus 100. Correspondingly, the application management apparatus 100 obtains the applications provided by the application developers, and builds, based on these applications, one virtual-world application including a plurality of sub-applications, where the sub-applications are the applications provided by the application developers.

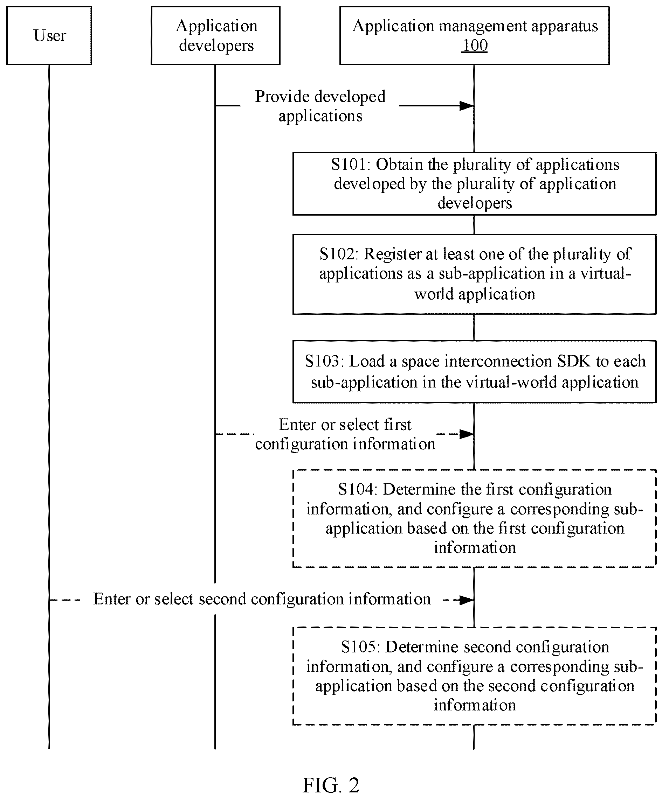

With reference to a schematic flowchart of the method for developing the virtual-world application shown in FIG. 2, the following describes in detail how the application management apparatus 100 implements development of the virtual-world application.

S101: The application management apparatus 100 obtains a plurality of applications developed by a plurality of application developers.

Specifically, the application management apparatus 100 provides an access interface, for example, an application programming interface (application programming interface, API) or a graphical user interface (graphical user interface, GUI). The plurality of application developers may upload, to the application management apparatus 100 through the access interface, the plurality of applications developed by the plurality of application developers. In this way, the application management apparatus 100 may obtain the plurality of applications developed by the plurality of application developers.

It should be understood that, in actual application, an application developer may also provide, for the application management apparatus 100 in an offline manner, an application developed by the application developer. For example, the application developer submits a paper material that records the application. The application management apparatus 100 may also obtain, by scanning the paper material, the application developed by the application developer.

S102: The application management apparatus 100 registers at least one of the plurality of applications as a sub-application in the virtual-world application.

Specifically, the application management apparatus 100 reviews each of the plurality of applications, and registers any application as a sub-application in the virtual-world application when the any application is approved. Optionally, for an unapproved application, the application management apparatus 100 may notify an application developer that the application is not approved, and may further notify the application developer of a reason why the application is not approved (for example, application content does not meet a standard), so that the application developer correspondingly modifies the application.

The application management apparatus 100 reviews each application based on one or more of the following: application content, application stability, and a resource required for application running. The application content includes, for example, an application type (for example, a game application or a shopping application), effect that can be presented by the application to a user (for example, a game task to be completed by the user in the game application, whether an image presented by the application to the user is exquisite, and whether a scene is smooth to switch), and similarity with an existing sub-application in the virtual-world application. The application stability includes, for example, whether the application breaks down or exits unexpectedly in a running process. The resource required for application running includes computing resources, storage resources, and network resources.

Correspondingly, the application management apparatus 100 determines, in the following manner, whether an application developed by an application developer is approved: When the application meets a preset condition, the application management apparatus 100 determines that the application is approved; or when the application does not meet a preset condition, the application management apparatus 100 determines that the application is not approved. The preset condition includes one or more of the following: Application content meets a requirement (for example, similarity with any existing sub-application in the virtual-world application is less than a threshold), application stability meets a standard (for example, the application does not break down or crash in a running process), and a resource required for application running is within an available resource range. It can be learned that each sub-application in the virtual-world application may be more standardized by reviewing the application developed by the application developer, so that the virtual-world application built based on a plurality of sub-applications is a high-quality application.

In some embodiments, that the application management apparatus 100 registers an approved application as a sub-application in the virtual-world application includes: The application management apparatus 100 adds an application identifier to the approved application, where the application identifier may be represented in a plurality of manners such as a character, a character string, or a uniform resource locator (uniform resource locator, URL). Then, the application management apparatus 100 stores the application identifier in association with the sub-application represented by the application identifier.

S103: The application management apparatus 100 loads a space interconnection SDK to each sub-application in the virtual-world application.

The application management apparatus 100 provides the space interconnection SDK, and the space interconnection SDK includes one or more of the following interfaces: a user identity interface, a user data interface, a transaction interface, and an application switching interface. Each interface may be an API, a GUI, or a command line interface (command line interface, CLI). The user identity interface is configured to obtain identity information of the user, for example, an account used by the user to log in to the virtual-world application (namely, a virtual-world application account). The user data interface is configured to obtain user data of the user in the virtual-world application, for example, a character (namely, a virtual avatar) used by the user in the virtual-world application, a location of the character in a scene, and value of a currency (including a virtual currency and a physical currency) owned by the user in the virtual-world application. The transaction interface is used to perform transaction with a currency in the virtual-world application, so that the user can purchase a virtual article (for example, a game tool or digital collections) or a physical article (for example, a game figure) in the virtual-world application. The application switching interface is used to enable the user to switch from one sub-application to another sub-application for access. It should be noted that the user in this embodiment of this application is a user who accesses the virtual-world application (may specifically access any sub-application in the virtual-world application).

It should be understood that sub-applications in the virtual-world application may be connected to each other by using the space interconnection SDK. For example, for a user A who accesses the virtual-world application, if the user A specifically accesses a first sub-application and a second sub-application in the virtual-world application, both the two sub-applications may obtain identity information of the user A through the user identity interface, a character used by the user A may be obtained through the user data interface, and the virtual-world application may also switch from the first sub-application to the second sub-application for access through the application switching interface, or switch from the second sub-application to the first sub-application for access through the application switching interface.

Optionally, the application management apparatus 100 may further perform the following steps.

S104: The application management apparatus 100 determines first configuration information selected or entered by the application developer, and configures a corresponding sub-application based on the first configuration information.

Specifically, the application developer may select or enter the first configuration information through the access interface provided by the application management apparatus 100. Correspondingly, the application management apparatus 100 receives and determines the first configuration information. Then, the application management apparatus 100 may configure the corresponding sub-application based on the first configuration information.

The first configuration information includes at least one of a range of a user who can access the sub-application and a charging mode of the sub-application. The application developer may select or enter, for the application management apparatus 100 by setting a user who can access the sub-application, or by setting a user who cannot access the sub-application, a range of the user who can access the sub-application. The charging mode of the sub-application includes a free access mode and a paid access mode. The free access mode means that the sub-application can be accessed without payment of the user, and the paid access mode means that the sub-application can be accessed only after the user pays. Further, in the paid access mode, the application developer may further set a more specific charging mode. For example, charging is performed based on time in which the user accesses the sub-application, or charging is performed monthly/yearly. For another example, the user may pay after the access or pay before the access.

In some embodiments, that the application management apparatus 100 configures the corresponding sub-application based on the first configuration information includes: The application management apparatus 100 configures at least one allowlist and/or at least one forbidden list for the sub-application based on the range of the user who can access the sub-application, where each allowlist indicates a user who can access the sub-application, and each forbidden list indicates a user who cannot access the sub-application. The application management apparatus 100 configures, based on the charging mode of the sub-application, the sub-application as a free access mode or a paid access mode (which may include a specific payment mode).

S105: The application management apparatus 100 determines second configuration information selected or entered by the user, and configures a corresponding sub-application based on the second configuration information.

Specifically, the user may select or enter the second configuration information through the access interface provided by the application management apparatus 100. Correspondingly, the application management apparatus 100 receives and determines the second configuration information. Then, the application management apparatus 100 may configure the corresponding sub-application based on the second configuration information.

The second configuration information includes a payment mode in which the user accesses the sub-application. For example, the user may choose to pay based on time for accessing the sub-application, or pay monthly/yearly. For another example, the user may choose to pay after the access, or pay before the access. In this case, that the application management apparatus 100 configures the corresponding sub-application based on the second configuration information includes: The application management apparatus 100 configures an allowlist and a payment mode for the sub-application. The allowlist indicates that the user can access the sub-application, and the payment mode indicates the payment mode in which the user accesses the sub-application.

According to the foregoing steps, the application management apparatus 100 may develop the virtual-world application. After development is completed, the application developer may further upgrade the sub-application developed by the application developer. Therefore, the application management apparatus 100 is further configured to obtain an upgraded sub-application, to obtain an upgrade virtual-world application, and manage a version of a virtual-world application obtained through each upgrade. In addition, the application management apparatus 100 may further release the virtual-world application, so that the user can access the virtual-world application.

In view of this, an embodiment of this application further provides a method for accessing a virtual-world application. The method supports a user to access the virtual-world application developed by an application management apparatus 100, and supports the user to switch from one sub-application to another sub-application in the virtual-world application for access. Specifically, a first sub-application and a second sub-application in the virtual-world application are used as an example for description. The method may include: logging in to a virtual-world application account of the user based on authentication information of the user; running the first sub-application according to a first operation instruction of the user, and sending a media stream of the first sub-application to a client corresponding to the user; and then switching from the first sub-application to the second sub-application through an application switching interface of the first sub-application according to a second operation instruction of the user, running the second sub-application, and sending a media stream of the second sub-application to the client corresponding to the user.

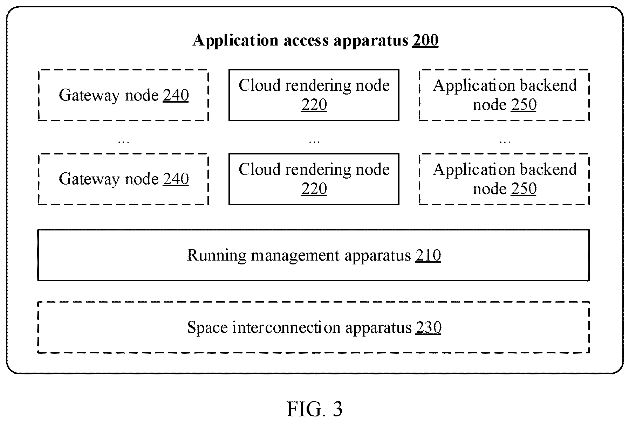

The foregoing method for accessing the virtual-world application may be performed by an application access apparatus. As shown in FIG. 3, the application access apparatus 200 includes a running management apparatus 210, at least one cloud rendering node 220, and a space interconnection apparatus 230. Optionally, the application access apparatus 200 further includes at least one gateway node 240 and at least one application backend node 250.

The running management apparatus 210 is configured to perform management on running of the virtual-world application, including one or more of the following: supporting the user to access the virtual-world application (which may be specifically any sub-application in the virtual-world application), deploying a sub-application accessed by the user on an appropriate cloud rendering node 220, supporting the user to switch from one sub-application to another sub-application for access, and recording running time and resource usage of a sub-application.

The at least one cloud rendering node 220 is configured to run the virtual-world application. Each of the at least one cloud rendering node 220 is configured to run one or more sub-applications in the virtual-world application, and send, to the client, a media stream generated in a running process of the sub-application, so that the client can present the media stream of the sub-application to the user. Correspondingly, the client may also send, to the cloud rendering node 220, an operation triggered by the user on the client, so that the cloud rendering node 220 runs the sub-application based on the operation of the user.

The space interconnection apparatus 230 is configured to store identity information of the user and user data of the user in the virtual-world application. It can be learned from the foregoing that the application management apparatus 100 loads a space interconnection SDK to each sub-application in the virtual-world application, and the space interconnection SDK in the sub-application is connected to the space interconnection apparatus 230, to invoke any interface in the space interconnection SDK.

Each of the at least one gateway node 240 may be implemented by using an entity device like a switch or a network address translation (network address translation, NAT) gateway, or may be implemented by using a virtual instance like a virtual machine (virtual machine, VM) or a container (container). The gateway node 240 is used to connect a client to a sub-application accessed by the client.

Each of the at least one application backend node 250 is connected to one or more cloud rendering nodes 220, and is specifically connected to a sub-application running on the one or more cloud rendering nodes 220. The application backend node 250 is configured to load the user data from the space interconnection apparatus 230, and synchronize the user data to a corresponding cloud rendering node 220, so that the cloud rendering node 220 can run a corresponding sub-application based on the user data.

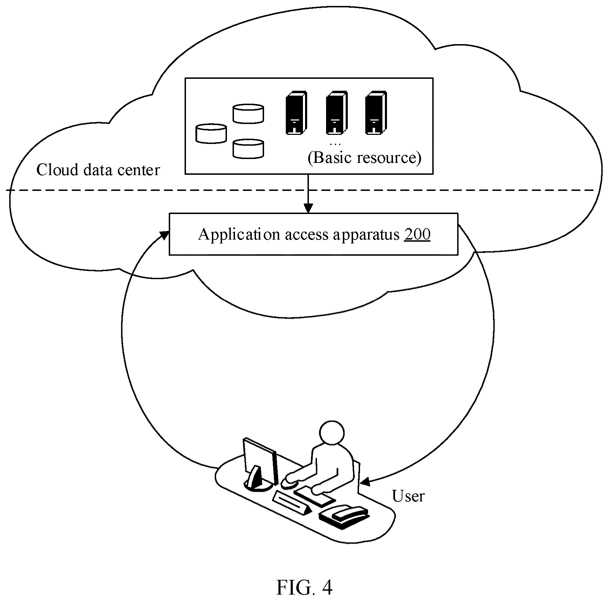

In this embodiment of this application, the application access apparatus 200 may alternatively be deployed in a cloud data center by a cloud service provider. As shown in FIG. 4, the cloud service provider provides a function of the application access apparatus 200 as a cloud service for a tenant (for example, the user). When using the cloud service, the user logs in to the virtual-world application by using the application access apparatus 200, and chooses to access a sub-application in the virtual-world application. Then, the application access apparatus 200 runs the sub-application, and sends a media stream of the sub-application to the client corresponding to the user.

The application access apparatus 200 may alternatively be deployed in different environments in a distributed manner. In some embodiments, the running management apparatus 210, the at least one cloud rendering node 220, the space interconnection apparatus 230, the at least one gateway node 240, and the at least one application backend node 250 in the application access apparatus 200 may be separately deployed in a terminal computing device cluster and the cloud data center. The terminal computing device cluster includes a plurality of terminal computing devices, and the terminal computing device includes a terminal server and the like. For example, the running management apparatus 210 is deployed in the terminal computing device cluster, and the at least one cloud rendering node 220, the space interconnection apparatus 230, the at least one gateway node 240, and the at least one application backend node 250 are deployed in the cloud data center.

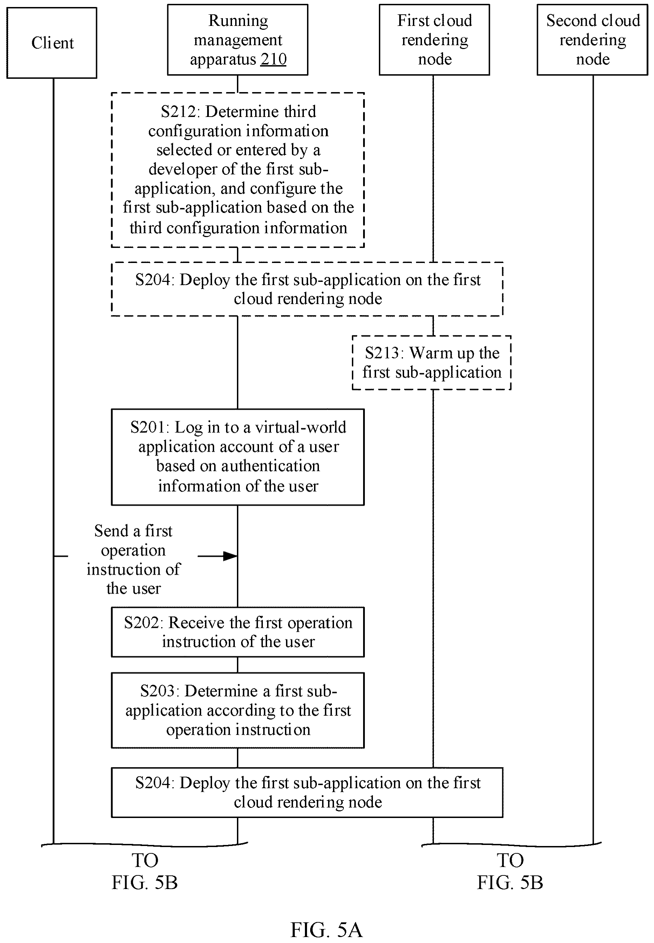

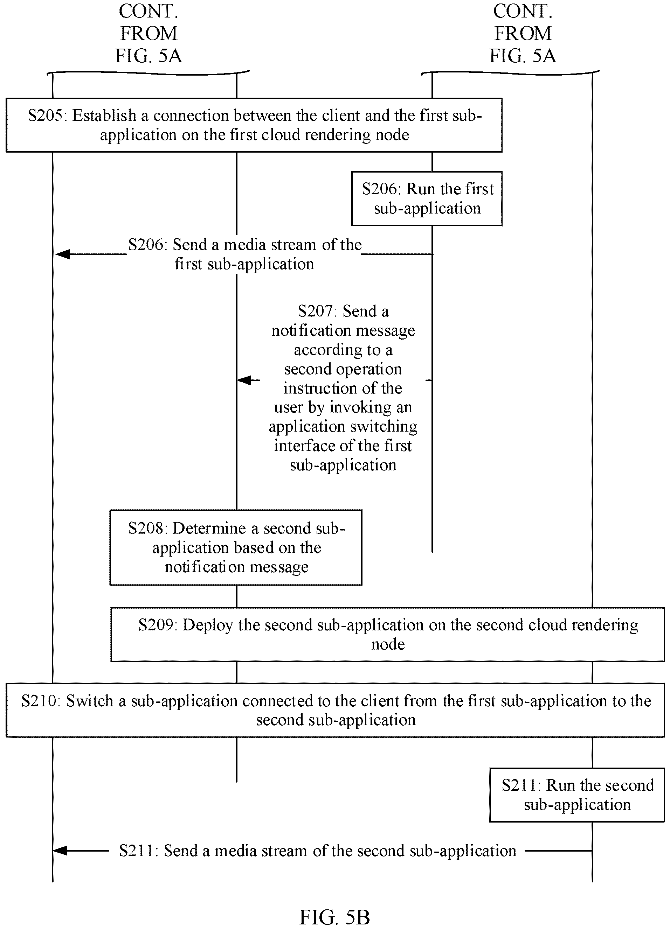

With reference to a schematic flowchart of the method for accessing the virtual-world application shown in FIG. 5A and FIG. 5B, the following describes in detail how the application access apparatus 200 implements the method for accessing the virtual-world application.

S201: The running management apparatus 210 logs in to the virtual-world application account of the user based on the authentication information of the user.

Specifically, the user registers the authentication information of the user with the running management apparatus 210 through the client, where the authentication information of the user includes information such as the virtual-world application account of the user and a password corresponding to the account. When the user accesses the virtual-world application, the user enters the authentication information to the running management apparatus 210 through the client. Correspondingly, the running management apparatus 210 obtains the authentication information, and logs in to the virtual-world application account of the user based on the authentication information, so that the user logs in to the virtual-world application.

S202: The running management apparatus 210 receives the first operation instruction that is of the user and that is sent by the client.

Specifically, after the user enters or selects the first operation instruction on the client, the client sends the first operation instruction to the running management apparatus 210. Correspondingly, the running management apparatus 210 receives the first operation instruction sent by the client. The first operation instruction instructs the client to request to access the first sub-application. The first sub-application may be selected by the user. For example, the running management apparatus 210 presents, to the user through the client, each sub-application included in the virtual-world application, so that the user selects a sub-application to be accessed. Alternatively, the first sub-application may be selected by the running management apparatus 210. For example, after the client logs in to the running management apparatus 210, the running management apparatus 210 considers by default that the client requests to access the first sub-application. Alternatively, the first sub-application may be determined by the running management apparatus 210 based on an access record of the user. For example, if a sub-application last accessed by the user is the first sub-application, the running management apparatus 210 determines that an application that the client currently requests to access is the first sub-application.

S203: The running management apparatus 210 determines the first sub-application according to the first operation instruction of the user.

It can be learned from S104 and S105 that the application management apparatus 100 may configure the first sub-application, and the configuration of the first sub-application includes a user or a range of the user who can access the first sub-application. In some embodiments, the application management apparatus 100 may send the configuration of the first sub-application to the running management apparatus. Therefore, optionally, the running management apparatus 210 may further determine, based on the configuration of the first sub-application, whether the user has permission to access the first sub-application. If the user has permission to access the first sub-application, subsequent steps may continue to be performed. If the user does not have permission to access the first sub-application, the running management apparatus 210 may notify the user that the user cannot access the first sub-application.

In addition, the configuration of the first sub-application may further include a charging mode of the first sub-application or a payment mode that is selected by the user for accessing the first sub-application. The charging mode of the first sub-application or the payment mode that is selected by the user for accessing the first sub-application may be charging (or paying) based on time in which the user accesses the first sub-application. Therefore, after determining that the user has permission to access the first sub-application, the running management apparatus 210 may further perform a step of starting charging, to record the time in which the user accesses the first sub-application.

S204: The running management apparatus 210 deploys the first sub-application on a first cloud rendering node in the at least one cloud rendering node 220.

Specifically, the running management apparatus 210 determines the first cloud rendering node, and sends a notification message to the first cloud rendering node. Correspondingly, the first cloud rendering node receives the notification message sent by the running management apparatus 210, obtains the first sub-application from the application management apparatus 100 based on the notification message, and deploys the first sub-application.

In some embodiments, that the running management apparatus 210 determines the first cloud rendering node includes: The running management apparatus 210 determines, based on resource usage of each cloud rendering node 220 and a resource required for running the first sub-application, a cloud rendering node currently suitable for running the first sub-application as the first cloud rendering node.

S205: The running management apparatus 210 establishes a connection between the client and the first sub-application on the first cloud rendering node.

In some embodiments, that the running management apparatus 210 establishes the connection between the client and the first sub-application on the first cloud rendering node includes: The running management apparatus 210 sends, to the client, an internet protocol (Internet Protocol, IP) address of the first cloud rendering node and a port number corresponding to the first sub-application. Correspondingly, the client receives the IP address of the first cloud rendering node and the port number corresponding to the first sub-application that are sent by the running management apparatus 210. Then, the client establishes the connection to the first sub-application on the first cloud rendering node based on the received internet protocol IP address of the first cloud rendering node and the received port number corresponding to the first sub-application.

In some other embodiments, the client is connected to the first sub-application on the first cloud rendering node through a first gateway node in the at least one gateway node 240. In this case, the running management apparatus 210 establishes the connection between the client and the first sub-application on the first cloud rendering node includes: The running management apparatus 210 sends, to the first gateway node, the IP address of the first cloud rendering node and the port number corresponding to the first sub-application. Correspondingly, the first gateway node receives the IP address of the first cloud rendering node and the port number corresponding to the first sub-application that are sent by the running management apparatus 210. Then, the first gateway node establishes the connection to the first sub-application on the first cloud rendering node based on the IP address of the first cloud rendering node and the port number corresponding to the first sub-application. The running management apparatus 210 further sends the IP address of the first gateway node to the client. Correspondingly, the client receives the IP address of the first gateway node sent by the running management apparatus 210. Then, the client establishes a connection to the first gateway node based on the IP address of the first gateway node. In this way, the connection between the client and the first sub-application on the first cloud rendering node may be established.

More specifically, that the running management apparatus 210 sends, to the first gateway node, the IP address of the first cloud rendering node and the port number corresponding to the first sub-application includes: After determining that the client (that is, the user) has permission to access the first sub-application, the running management apparatus 210 sends an authentication token of the client to the first gateway node. Then, the first gateway node may query the IP address of the first cloud rendering node and the port number of the first sub-application from the running management apparatus 210 based on the authentication token.

It can be learned from S213 below that, before the client sends the first operation instruction to the running management apparatus 210, the running management apparatus 210 may determine the first cloud rendering node in advance. In this case, that the running management apparatus 210 sends, to the first gateway node, the IP address of the first cloud rendering node and the port number corresponding to the first sub-application includes: After determining that the client (that is, the user) has permission to access the first sub-application, the running management apparatus 210 sends, to the first gateway node, the authentication token of the client, the IP address of the first cloud rendering node and the port number corresponding to the first sub-application that correspond to the authentication token.

It can be learned from the foregoing description that, when the client is connected to the first sub-application on the first cloud rendering node through the first gateway node, the IP address of the first cloud rendering node and the port number corresponding to the first sub-application can be prevented from being directly exposed to the client. This improves security of the first cloud rendering node and the first sub-application run on the first cloud rendering node.

S206: The first cloud rendering node runs the first sub-application, and sends a media stream of the first sub-application to the client.

Specifically, the first cloud rendering node includes a cloud rendering agent program. The first cloud rendering node starts the first sub-application by using the cloud rendering agent program, to run the first sub-application. The first cloud rendering node further obtains, by using the cloud rendering agent program, a media stream generated by the first sub-application in a running process (referred to as the media stream of the first sub-application for short below), and sends the media stream of the first sub-application to the client. Correspondingly, the client receives the media stream of the first sub-application sent by the first cloud rendering node, and presents the media stream of the first sub-application to the user. The media stream of the first sub-application includes at least one of an image stream of the first sub-application and an audio stream of the first sub-application.

In some embodiments, that the first cloud rendering node runs the first sub-application includes: The first cloud rendering node loads user data of the first sub-application from the space interconnection apparatus 230 by invoking the space interconnection SDK in the first sub-application, and then runs the first sub-application based on the user data of the first sub-application. The user data of the first sub-application includes, for example, a character used by the user in the first sub-application, a location of the character in a scene, and an operation triggered by the user on the client.

In some other embodiments, it can be learned from FIG. 3 that the application access apparatus 200 may further include at least one application backend node 250, and the at least one application backend node 250 includes a first application backend node. That the first cloud rendering node runs the first sub-application includes: The first application backend node is connected to the first sub-application on the first cloud rendering node, and then loads the user data of the first sub-application from the space interconnection apparatus 230 by invoking the space interconnection SDK in the first sub-application, to synchronize the user data of the first sub-application to the first cloud rendering node. Correspondingly, the first cloud rendering node receives the user data of the first sub-application synchronized by the first application backend node, and runs the first sub-application based on the user data of the first sub-application.

It should be understood that, in actual application, before the first application backend node synchronizes the user data of the first sub-application to the first cloud rendering node, the first application backend node further determines whether the user data of the first sub-application is real data. The first application backend node synchronizes the user data of the first sub-application to the first cloud rendering node only when the user data of the first sub-application is the real data. This can improve security of the first sub-application. For example, the first application backend node learns that the character used by the user is currently located at a location A. In this case, the first backend node determines, based on a historical location and an allowable moving speed of the character, whether that the character is currently located at the location A is the real data. It is assumed that the location A is a specified location mentioned in S207 below, and the location indicates that the user selects or enters the second operation instruction on the client. According to the foregoing steps, it can be ensured that the user has actually selected or entered the second operation instruction on the client.

In addition to the first cloud rendering node, another cloud rendering node 220 in the at least one cloud rendering node 220 may also run a first sub-application, and the first sub-application run on the another cloud rendering node 220 is accessed by another user. In this case, the first application backend node may also be connected to the first sub-application on the another cloud rendering node 220, obtain corresponding user data, and then may further synchronize the obtained user data to the first cloud rendering node, so that the user can view an operation performed by the another user in the first sub-application.

In some embodiments, when the application access apparatus 200 is deployed in the cloud data center by the cloud service provider and is provided for the user as a cloud service, the application access apparatus 200 may further send the media stream of the first sub-application to the client via a real-time audio/video service provided by the cloud service provider. The real-time audio/video service is a service dedicated to audio/video transmission, and especially has characteristics of low frame freezing, high quality, and high reliability for cross-region audio/video transmission. Specifically, the running management apparatus 210 informs the first cloud rendering node to push the media stream of the first sub-application to the real-time audio/video service, and then the real-time audio/video service transmits the media stream of the first sub-application to the client. The first cloud rendering node may push, based on a real-time messaging protocol (real-time messaging protocol, RTMP), the media stream of the first sub-application to an address provided by the real-time audio/video service, or invoke an SDK provided by the real-time audio/video service to push the media stream of the first sub-application to the real-time audio/video service.

S207: The first cloud rendering node sends a notification message to the running management apparatus 210 according to the second operation instruction of the user by invoking the application switching interface of the first sub-application.

Specifically, after the user enters or selects the second operation instruction on the client, the client feeds back the second operation instruction to the first cloud rendering node. Then, the first cloud rendering node sends the notification message to the running management apparatus 210 according to the second operation instruction by invoking the application switching interface of the first sub-application. The second operation instruction may be an operation triggered by the user on the client. For example, the user moves the character in the first sub-application from a current location to the specified location through an operation, or the user clicks an application switching option displayed on the client.

In some embodiments, the first cloud rendering node sends the notification message to the running management apparatus 210 through the application switching interface of the first sub-application in the following two manners: First, the first cloud rendering node directly sends the notification message to the running management apparatus 210 by invoking the application switching interface. Second, the first cloud rendering node instructs, by invoking the application switching interface, the space interconnection apparatus 230 to send the notification message to the running management apparatus 210.

S208: The running management apparatus 210 determines the second sub-application based on the notification message.

The notification message includes an identifier of the second sub-application, and the identifier of the second sub-application may be set by the application management apparatus 100 (for example, S102), or may be set by a developer of the second sub-application (for a specific setting manner, refer to an identifier of the first sub-application that is set by a developer of the first sub-application for the first sub-application in S212 below). In this case, that the running management apparatus 210 determines the second sub-application based on the notification message includes: The running management apparatus 210 obtains the identifier of the second sub-application based on the notification message, and then determines the second sub-application based on the identifier of the second sub-application.

Similar to that of the first sub-application, the application management apparatus 100 may also configure the second sub-application, and the configuration of the second sub-application includes a user or a range of the user who can access the second sub-application. The application management apparatus 100 may send the configuration of the second sub-application to the running management apparatus 210. Therefore, optionally, after determining the second sub-application, the running management apparatus 210 may further determine, based on the configuration of the second sub-application, whether the user has permission to access the second sub-application. If the user has permission to access the second sub-application, subsequent steps may continue to be performed. If the user does not have permission to access the second sub-application, the running management apparatus 210 may notify the user that the user cannot access the second sub-application.

In addition, the configuration of the second sub-application may further include a charging mode of the second sub-application or a payment mode that is selected by the user for accessing the second sub-application. The charging mode of the second sub-application or the payment mode that is selected by the user for accessing the second sub-application may be charging (or paying) based on time in which the user accesses the second sub-application. Therefore, after determining that the user has permission to access the second sub-application, the running management apparatus 210 may further perform a step of starting charging, to record the time in which the user accesses the second sub-application.

S209: The running management apparatus 210 deploys the second sub-application on a second cloud rendering node in the at least one cloud rendering node 220.

In some embodiments, the first cloud rendering node and the second cloud rendering node may be a same cloud rendering node 220, or may be different cloud rendering nodes 220.

In addition, a specific implementation of this step is similar to the implementation of deploying the first sub-application on the first cloud rendering node in S204. For brevity, this step is not described herein again.

S210: The running management apparatus 210 switches a sub-application connected to the client from the first sub-application to the second sub-application.

Specifically, the running management apparatus 210 disconnects the client from the first sub-application on the first cloud rendering node, and establishes a connection between the client and the second sub-application on the second cloud rendering node.

In some embodiments, when the client is directly connected to the first sub-application on the first cloud rendering node, that the running management apparatus 210 disconnects the client from the first sub-application on the first cloud rendering node includes: The running management apparatus 210 sends the notification message to the first cloud rendering node. Correspondingly, the first cloud rendering node receives the notification message sent by the running management apparatus 210. Then, the first cloud rendering node disconnects from the client based on the notification message.

In some other embodiments, when the client is connected to the first sub-application on the first cloud rendering node through the first gateway node, that the running management apparatus 210 disconnects the client from the first sub-application on the first cloud rendering node includes: The running management apparatus 210 sends the notification message to the first gateway node. Correspondingly, the first gateway node receives the notification message sent by the running management apparatus 210. Then, the first gateway node disconnects from the client based on the notification message.

Similarly, the client may be directly connected to the second sub-application on the second cloud rendering node, or may be connected to the second sub-application on the second cloud rendering node through the first gateway node. A specific implementation is similar to that of establishing the connection between the client and the first sub-application on the first cloud rendering node in S205. For brevity, details are not described herein again.

It should be understood that, in the process in which the sub-application connected to the client is switched from the first sub-application to the second sub-application, if the client is connected to the first sub-application and the second sub-application through the first gateway node, the first gateway node may keep a session in the sub-application switching process, so that the client can still present the media stream of the first sub-application to the user after being disconnected from the first sub-application, and the client presents the media stream of the second sub-application to the user after being connected to the second sub-application. This can improve user experience.

S211: The second cloud rendering node runs the second sub-application, and sends the media stream of the second sub-application to the client.

Specifically, the second cloud rendering node also includes a cloud rendering agent program. To be specific, the second cloud rendering node may start the second sub-application by using the cloud rendering agent program, to run the second sub-application; and may further obtain, by using the cloud rendering agent program, a media stream (referred to as the media stream of the second sub-application for short below) generated by the second sub-application in a running process, and send the media stream of the second sub-application to the client. Correspondingly, the client receives the media stream of the second sub-application sent by the second cloud rendering node, and presents the media stream of the second sub-application to the user. The media stream of the second sub-application includes at least one of an image stream of the second sub-application and an audio stream of the second sub-application.

It should be noted that a specific implementation in which the second cloud rendering node runs the second sub-application in this step is similar to the implementation in which the first cloud rendering node runs the first sub-application in S206 above. For brevity, details are not described herein again. In addition, in actual application, the second cloud rendering node may alternatively send the media stream of the second sub-application to the client via the real-time audio/video service. When the second cloud rendering node sends the media stream of the second sub-application to the client via the real-time audio/video service, after the running management apparatus switches a sub-application connected to the client from the first sub-application to the second sub-application, the running management apparatus further notifies the second cloud rendering node to push the media stream of the second sub-application to the real-time audio/video service, so that the second cloud rendering node can push the media stream of the second sub-application to the real-time audio/video service.

Optionally, S204 and S201 may be exchanged in an execution sequence. When S204 and S201 are exchanged in the execution sequence (that is, S204 is performed before S201), before S204 is performed, S212 below is further performed. In addition, before S201 is performed, S213 is further performed. A specific process is as follows:
S212: The running management apparatus 210 determines third configuration information selected or entered by the developer of the first sub-application, and configures the first sub-application based on the third configuration information.

Specifically, the running management apparatus 210 may provide an access interface (for example, an API or a GUI). The developer of the first sub-application selects or enters the third configuration information through the access interface. Correspondingly, the running management apparatus 210 receives and determines the second configuration information. Then, the running management apparatus 210 configures the first sub-application based on the third configuration information.

The third configuration information may include the identifier of the first sub-application. The identifier of the first sub-application may be represented in a plurality of manners such as a URL, a character, and a character string. In this case, that the running management apparatus 210 configures the first sub-application based on the third configuration information includes: The running management apparatus 210 configures the identifier for the first sub-application.

The third configuration information may further include a resource scheduling mode, and the resource scheduling mode indicates which cloud rendering node 220 or cloud rendering nodes 220 on which the first sub-application is to be deployed. In some embodiments, the running management apparatus 210 provides two resource scheduling modes for the developer of the first sub-application: a fixed resource pool scheduling mode and an elastic resource pool scheduling mode. A quantity of cloud rendering nodes in a fixed resource pool is fixed. A quantity of cloud rendering nodes in an elastic resource pool is dynamically adjusted in an auto scaling (auto scaling, AS) manner. To be specific, a cloud rendering node for running the sub-application is dynamically added or reduced based on an actual service requirement (for example, accesses of the first sub-application) and resource usage. The developer of the first sub-application may select (or purchase) a corresponding resource scheduling mode based on a service requirement of the first sub-application. When the developer of the first sub-application selects (or purchases) the fixed resource pool scheduling mode, the running management apparatus 210 configures a resource scheduling mode of the first sub-application as the fixed resource pool scheduling mode. In this way, when the first sub-application needs to be run, the running management apparatus 210 may deploy the first sub-application on the fixed resource pool based on the configuration. When the developer of the first sub-application selects (or purchases) the elastic resource pool scheduling mode, the running management apparatus 210 configures a resource scheduling mode of the first sub-application as the elastic resource pool scheduling mode. In this way, when the first sub-application needs to be run, the running management apparatus 210 may deploy the first sub-application on the elastic resource pool based on the configuration. In other words, the running management apparatus 210 configures a cloud rendering node for the first sub-application by performing AS evaluation on a resource required by the first sub-application. For example, when a service requirement increases or most resources in a current resource pool are occupied, the running management apparatus 210 adds, to the first sub-application, a cloud rendering node for running the sub-application; or when a service requirement decreases or a large quantity of cloud rendering nodes in a current resource pool are not used, the running management apparatus 210 reduces, for the first sub-application, a cloud rendering node for running the sub-application.

S204: The running management apparatus 210 deploys the first sub-application on the first cloud rendering node.

S213: The first cloud rendering node warms up the first sub-application.

Specifically, the running management apparatus 210 determines, based on the resource scheduling mode of the first sub-application, the resource (that is, the first cloud rendering node) required for running the sub-application. Then, the running management apparatus 210 deploys the first sub-application on the first cloud rendering node, and the first cloud rendering node starts the first sub-application in advance. In this way, a delay caused by temporary startup can be shortened. Then, S201 to S203, S205, and subsequent steps may be performed.

Similarly, S209 and S208 may also be exchanged in an execution sequence. When S209 and S208 are exchanged in the execution sequence, the running management apparatus 210 further performs the step of determining configuration information selected or entered by the developer of the second sub-application and configuring the second sub-application based on the configuration information. Then, the running management apparatus 210 performs S209. In addition, before the running management apparatus 210 performs S208, the second cloud rendering node may further perform a step of warming up the second sub-application. This process is similar to a case in which S204 and S201 are exchanged in the execution sequence. For brevity, details are not described herein again.

The method for developing the virtual-world application and the method for accessing the virtual-world application provided in embodiments of this application are described in detail with reference to FIG. 2, FIG. 5A, and FIG. 5B above. The following describes in detail, in terms of structure, an application management apparatus 100 and an application access apparatus 200 that implement the foregoing method embodiments.

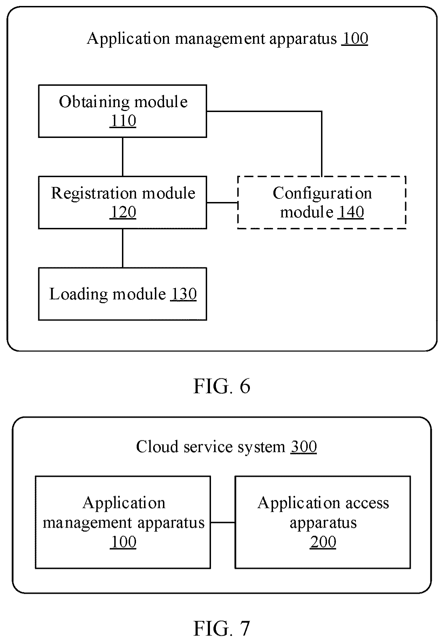

FIG. 6 is a diagram of an example of a structure of the application management apparatus 100. As shown in FIG. 6, the application management apparatus 100 includes an obtaining module 110, a registration module 120, and a loading module 130. Optionally, the application management apparatus 100 further includes a configuration module 140. The obtaining module 110, the registration module 120, the loading module 130, and the optional configuration module 140 work together to implement the steps performed by the application management apparatus 100 in the foregoing method embodiments. Specifically, the obtaining module 110 is configured to perform S101, the registration module 120 is configured to perform S102, the loading module 130 is configured to perform S103, and the configuration module 140 is configured to perform S104 and S105.

In this embodiment of this application, the obtaining module 110, the registration module 120, the loading module 130, and the configuration module 140 may all be implemented by using software, or may be implemented by using hardware. For example, an implementation of the registration module 120 is described by using the registration module 120 as an example. Similarly, for implementations of the obtaining module 110, the loading module 130, and the configuration module 140, refer to the implementation of the registration module 120.

As an example of a software functional unit, the registration module 120 may include code run on a computing instance. The computing instance may include at least one of a physical host (a computing device), a virtual machine, and a container. Further, there may be one or more computing instances. For example, the registration module 120 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed on a plurality of VPCs. Generally, one VPC is set in one region. A communication gateway needs to be set in each VPC for cross-region communication between two VPCs in a same region and between VPCs in different regions. The VPCs are interconnected through the communication gateway.

As an example of a hardware functional unit, the registration module 120 may include at least one computing device, for example, a server. Alternatively, the registration module 120 may be a device implemented by using an application-specific integrated circuit (application-specific integrated circuit, ASIC), a programmable logic device (programmable logic device, PLD), or the like. The PLD may be a complex programmable logical device (complex programmable logical device, CPLD), a field-programmable gate array (field-programmable gate array, FPGA), generic array logic (generic array logic, GAL), or any combination thereof.

A plurality of computing devices included in the registration module 120 may be distributed in a same region, or may be distributed in different regions. The plurality of computing devices included in the registration module 120 may be distributed in a same AZ, or may be distributed in different AZs. Similarly, the plurality of computing devices included in the registration module 120 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the obtaining module 110 may be configured to perform any one or more steps in S101 to S105, and the registration module 120 may be configured to perform any one or more steps in S101 to S105, the loading module 130 may be configured to perform any one or more steps in S101 to S105, and the configuration module 140 may be configured to perform any one or more steps in S101 to S105. The steps that the obtaining module 110, the registration module 120, the loading module 130, and the configuration module 140 are responsible for implementing may be specified as required. The obtaining module 110, the registration module 120, the loading module 130, and the configuration module 140 separately implement different steps in the foregoing method for developing the virtual-world application (including S101 to S105), to implement all functions of the application management apparatus 100.

FIG. 3 is a diagram of an example of a structure of the application access apparatus 200 above. In FIG. 3, the running management apparatus 210, the at least one cloud rendering node 220, the space interconnection apparatus 230, the at least one optional gateway node 240, and the at least one optional application backend node 250 in the application access apparatus 200 work together, to implement the steps performed by the application access apparatus 200 in the foregoing method embodiments. Specifically, the running management apparatus 210 is configured to perform S201 to S205, S208 to S210, and S212. The at least one cloud rendering node 220 is configured to perform S206, S207, S211, and S213. The space interconnection apparatus 230 is configured to store identity information of a user, user data of the user in a virtual-world application, and the like. The at least one gateway node 240 is used to perform related steps of connecting a client to a first sub-application on a first cloud rendering node in S205 and connecting the client to a second sub-application on a second cloud rendering node in S210. The at least one application backend node 250 is configured to perform related steps of loading user data of the first sub-application from the space interconnection apparatus 230 and synchronizing the data to the first cloud rendering node in S206, and loading user data of the second sub-application from the space interconnection apparatus 230 and synchronizing the data to the second cloud rendering node in S211. In addition, the at least one application backend node 250 is further configured to perform related steps of determining whether the loaded user data is real data, and synchronizing a plurality of pieces of user data of a sub-application to a plurality of cloud rendering nodes on which the sub-application is run.

In this embodiment of this application, the running management apparatus 210, the at least one cloud rendering node 220, the space interconnection apparatus 230, the at least one gateway node 240, and the at least one application backend node 250 may all be implemented by using software, or may be implemented by using hardware. For example, an implementation of the running management apparatus 210 is described below by using the running management apparatus 210 as an example. Similarly, for implementations of the at least one cloud rendering node 220, the space interconnection apparatus 230, the at least one gateway node 240, and the at least one application backend node 250, refer to the implementation of the running management apparatus 210.

As an example of a software functional unit, the running management apparatus 210 may include code run on a computing instance. The computing instance may include at least one of a physical host (a computing device), a virtual machine, and a container. Further, there may be one or more computing instances. For example, the running management apparatus 210 may include code run on a plurality of hosts/virtual machines/containers. It should be noted that the plurality of hosts/virtual machines/containers configured to run the code may be distributed in a same region, or may be distributed in different regions. Further, the plurality of hosts/virtual machines/containers configured to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same VPC, or may be distributed in a plurality of VPCs. Generally, one VPC is set in one region. A communication gateway needs to be set in each VPC for cross-region communication between two VPCs in a same region and between VPCs in different regions. The VPCs are interconnected through the communication gateway.

As an example of a hardware functional unit, the running management apparatus 210 may include at least one computing device, for example, a server. Alternatively, the running management apparatus 210 may be a device implemented by using an ASIC or a PLD, or the like. The PLD may be implemented by a CPLD, an FPGA, GAL, or any combination thereof.

A plurality of computing devices included in the running management apparatus 210 may be distributed in a same region, or may be distributed in different regions. The plurality of computing devices included in the running management apparatus 210 may be distributed in a same AZ, or may be distributed in different AZs. Similarly, the plurality of computing devices included in the running management apparatus 210 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the running management apparatus 210 may be configured to perform any one or more steps in S201 to S213, the at least one cloud rendering node 220 may be configured to perform any one or more steps in S201 to S213, the space interconnection apparatus 230 may be configured to perform any one or more steps in S201 to S213, the at least one gateway node 240 may be configured to perform any one or more steps in S201 to S213, and the at least one application backend node 250 may be configured to perform any one or more steps in S201 to S213. The steps that the running management apparatus 210, the at least one cloud rendering node 220, the space interconnection apparatus 230, the at least one gateway node 240, and the at least one application backend node 250 are responsible for implementing may be specified as required, and the running management apparatus 210, the at least one cloud rendering node 220, the space interconnection apparatus 230, the at least one gateway node 240, and the at least one application backend node 250 separately implement different steps in the foregoing method for accessing the virtual-world application (including S201 to S213), to implement all functions of the application access apparatus 200.

An embodiment of this application further provides a cloud service system. As shown in FIG. 7, the cloud service system 300 includes the application management apparatus 100 and/or the application access apparatus 200. In other words, the application management apparatus 100 and/or the application access apparatus 200 are/is deployed in a cloud data center, and functions of the application management apparatus 100 and/or the application access apparatus 200 are provided for a tenant (including an application developer and a user) as a cloud service. According to the cloud service system 300, a plurality of application developers may collaboratively develop a same virtual-world application, and the user may access the virtual-world application. It should be understood that, when the application management apparatus 100 is deployed in the cloud data center, upgrade of the virtual-world application may be completed in the cloud data center. This can reduce impact of the upgrade on a service.

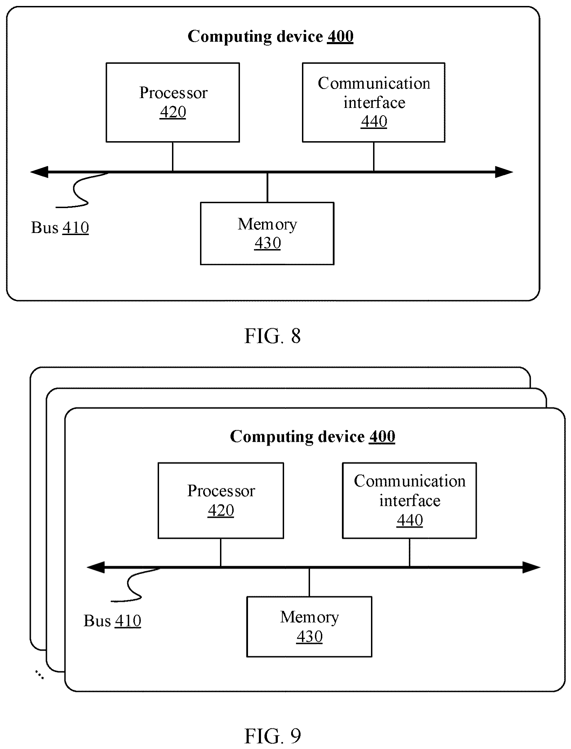

An embodiment of this application further provides a computing device. As shown in FIG. 8, the computing device 400 includes a bus 410, a processor 420, a memory 430, and a communication interface 440. The processor 420, the memory 430, and the communication interface 440 communicate with each other through the bus 410. The computing device 400 may be a server or a terminal device. It should be understood that quantities of processors and memories of the computing device 400 are not limited in embodiments of this application.

The bus 410 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used for representation in FIG. 8, but this does not mean that there is only one bus or only one type of bus. The bus 410 may include a path for information transfer between components (for example, the processor 420, the memory 430, and the communication interface 440) of the computing device 400.

The processor 420 may include any one or more of processors such as a CPU, a graphics processing unit (graphics processing unit, GPU), a microprocessor (microprocessor, MP), or a digital signal processor (digital signal processor, DSP).

The memory 430 may include a volatile memory (volatile memory), for example, a random access memory (random access memory, RAM). The processor 420 may further include a non-volatile memory (non-volatile memory), for example, a read-only memory (read-only memory, ROM), a flash memory, a hard disk drive (hard disk drive, HDD), or a solid state drive (solid state drive, SSD).

The memory 430 stores instructions, and the processor 420 executes the instructions to separately implement functions of one or more modules included in the application management apparatus 100 and/or the application access apparatus 200, to implement the method for developing the virtual-world application (including S101 to S105) and/or the method for accessing the virtual-world application (including S201 to S213) described above. In other words, the memory 430 stores instructions used to perform the method for developing the virtual-world application and/or the method for accessing the virtual-world application described above.

The communication interface 440 uses a transceiver module, for example, but not limited to, a network interface card or a transceiver, to implement communication between the computing device 400 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone. A plurality of computing devices in the computing device cluster may be connected to each other through a network, and the network may be a wide area network, a local area network, or the like.

As shown in FIG. 9, the computing device cluster includes at least one computing device 400. Memories 430 of one or more computing devices 400 in the computing device cluster may store same instructions. The instructions include instructions used to implement the foregoing method for developing the virtual-world application, and/or instructions used to implement the foregoing method for accessing the virtual-world application.

In some possible implementations, memories 430 of one or more computing devices 400 in the computing device cluster may alternatively separately store some instructions used to perform the foregoing method for developing the virtual-world application. In other words, a combination of the one or more computing devices 400 may jointly perform the foregoing method for developing the virtual-world application. Memories 430 of one or more computing devices 400 in the computing device cluster may alternatively separately store some instructions used to perform the foregoing method for accessing the virtual-world application. In other words, a combination of the one or more computing devices 400 may jointly perform the foregoing method for accessing the virtual-world application.

It should be noted that memories 430 of different computing devices 400 in the computing device cluster may store different instructions that are separately used to perform some functions of the application management apparatus 100 or the application access apparatus 200. In other words, instructions stored in the memories 430 of the different computing devices 400 may implement functions of one or more modules included in the application management apparatus 100 and/or the application access apparatus 200.

An embodiment of this application further provides a computer program product including instructions. The computer program product may be software or a program product that includes the instructions and that can run on a computing device or can be stored in any usable medium. When the computer program product runs on at least one computing device, the at least one computing device is enabled to perform the method for developing the virtual-world application and/or the method for accessing the virtual-world application described above.

Embodiments of this application further provide a computer-readable storage medium. The computer-readable storage medium may be any usable medium that can be stored by a computing device or a data storage device such as a data center that includes one or more usable media. The usable medium may be a magnetic medium (for example, a floppy disk, a hard disk, or a magnetic tape), or an optical medium (for example, DVD), a semiconductor medium (for example, a solid state disk), or the like. The computer-readable storage medium includes instructions instructing the computing device to perform the method for developing the virtual-world application and/or the method for accessing the virtual-world application described above.

Finally, it should be noted that the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of this application.

## Claims

1. A method for accessing a virtual-world application, applied to an application access apparatus, wherein the method comprises:
logging in to a virtual-world application account of a user based on authentication information of the user;
running a first sub-application according to a first operation instruction of the user, and sending a media stream of the first sub-application to a client corresponding to the user, wherein the virtual-world application comprises the first sub-application;
switching from the first sub-application to a second sub-application through an application switching interface of the first sub-application according to a second operation instruction of the user, wherein the virtual-world application further comprises the second sub-application; and
running the second sub-application, and sending a media stream of the second sub-application to the client corresponding to the user.

2. The method according to claim 1, wherein the application access apparatus comprises a running management apparatus and at least one cloud rendering node; and switching from the first sub-application to the second sub-application through the application switching interface of the first sub-application comprises:
sending, by a first cloud rendering node in the at least one cloud rendering node, a notification message to the running management apparatus by invoking the application switching interface of the first sub-application, wherein the first sub-application is run on the first cloud rendering node, and the client is connected to the first sub-application on the first cloud rendering node; and
determining, by the running management apparatus, the second sub-application based on the notification message, deploying the second sub-application on a second cloud rendering node in the at least one cloud rendering node, and switching a sub-application connected to the client from the first sub-application to the second sub-application; and
running the second sub-application, and sending the media stream of the second sub-application to the client corresponding to the user comprise:
running, by the second cloud rendering node, the second sub-application, and sending the media stream of the second sub-application to the client.

3. The method according to claim 2, wherein the first sub-application and the second sub-application are developed by different application developers.

4. The method according to claim 3, wherein the first sub-application and the second sub-application are applications that are reviewed by an application management apparatus based on at least one of application content, application stability, or a resource required for application running.

5. The method according to claim 3 or 4, wherein before switching, by the running management apparatus, a sub-application connected to the client from the first sub-application to the second sub-application, the method further comprises:
obtaining, by the running management apparatus, a configuration of the second sub-application, wherein the configuration is obtained by configuring the second sub-application by the application management apparatus based on configuration information selected or entered by an application developer corresponding to the second sub-application; and
determining, by the running management apparatus based on the configuration of the second sub-application, at least one of whether the user has permission to access the second sub-application and fees for accessing the second sub-application by the user.

6. A method for developing a virtual-world application, applied to an application management apparatus, wherein the method comprises:
obtaining a plurality of applications developed by a plurality of application developers; and
registering at least one of the plurality of applications as a sub-application in the virtual-world application, wherein the virtual-world application allows a user to switch from any sub-application to another sub-application for access.

7. The method according to claim 6, wherein the method further comprises:
loading a space interconnection software development kit SDK to the any sub-application, wherein the space interconnection SDK comprises an application switching interface, and the application switching interface is used by the user to switch from the any sub-application to the another sub-application for access.

8. The method according to claim 6 or 7, wherein registering the at least one of the plurality of applications as the sub-application in the virtual-world application comprises:
reviewing each of the plurality of applications based on at least one of application content, application stability, and a resource required for application running; and
registering any application as the sub-application in the virtual-world application when the any application is approved.

9. The method according to any one of claims 6 to 8, wherein the method further comprises:
determining configuration information selected or entered by an application developer corresponding to the sub-application, and configuring the corresponding sub-application based on the configuration information, wherein the configuration information comprises at least one of a range of a user who can access the sub-application and a payment mode in which the user accesses the sub-application.

10. An application access apparatus, comprising:
a running management apparatus, configured to log in to a virtual-world application account of a user based on authentication information of the user; and
at least one cloud rendering node, configured to: run a first sub-application according to a first operation instruction of the user, and send a media stream of the first sub-application to a client corresponding to the user, wherein a virtual-world application comprises the first sub-application; switch from the first sub-application to the second sub-application through an application switching interface of the first sub-application according to a second operation instruction of the user, wherein the virtual-world application further comprises the second sub-application; and run the second sub-application, and send a media stream of the second sub-application to the client corresponding to the user.

11. The application access apparatus according to claim 10, wherein the at least one cloud rendering node comprises a first cloud rendering node and a second cloud rendering node;
the first cloud rendering node is configured to send a notification message to the running management apparatus by invoking the application switching interface of the first sub-application, wherein the first sub-application is run on the first cloud rendering node, and the client is connected to the first sub-application on the first cloud rendering node;
the running management apparatus is configured to: determine the second sub-application based on the notification message, deploy the second sub-application on the second cloud rendering node, and switch a sub-application connected to the client from the first sub-application to the second sub-application; and
the second cloud rendering node is configured to: run the second sub-application, and send the media stream of the second sub-application to the client.

12. The application access apparatus according to claim 11, wherein the first sub-application and the second sub-application are developed by different application developers.

13. The application access apparatus according to claim 12, wherein the first sub-application and the second sub-application are applications that are reviewed by an application management apparatus based on at least one of application content, application stability, and a resource required for application running.

14. The application access apparatus according to claim 12 or 13, wherein
the running management apparatus is further configured to: obtain a configuration of the second sub-application, and determine, based on the configuration of the second sub-application, at least one of whether the user has permission to access the second sub-application and fees for accessing the second sub-application by the user, wherein the configuration is obtained by configuring the second sub-application by the application management apparatus based on configuration information selected or entered by an application developer corresponding to the second sub-application.

15. An application management apparatus, comprising:
an obtaining module, configured to obtain a plurality of applications developed by a plurality of application developers; and
a registration module, configured to register at least one of the plurality of applications as a sub-application in a virtual-world application, wherein the virtual-world application allows a user to switch from any sub-application to another sub-application for access.

16. The application management apparatus according to claim 15, further comprising:
a loading module, configured to load a space interconnection software development kit SDK to the any sub-application, wherein the space interconnection SDK comprises an application switching interface, and the application switching interface is used by the user to switch from the any sub-application to the another sub-application for access.

17. The application management apparatus according to claim 15 or 16, wherein
the registration module is configured to: review each of the plurality of applications based on at least one of application content, application stability, and a resource required for application running, and register any application as the sub-application in the virtual-world application when the any application is approved.

18. The application management apparatus according to any one of claims 15 to 17, further comprising:
a configuration module, configured to: determine configuration information selected or entered by an application developer corresponding to the sub-application, and configure the corresponding sub-application based on the configuration information, wherein the configuration information comprises at least one of a range of a user who can access the sub-application and a payment mode in which the user accesses the sub-application.

19. A cloud service system, comprising at least one of the application access apparatus according to any one of claims 1 to 5 and the application management apparatus according to any one of claims 6 to 9.

20. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 9.

21. A computer program product comprising instructions, wherein when the instructions are run by a computing device cluster, the computing device cluster is enabled to perform the method according to any one of claims 1 to 9.

22. A computer-readable storage medium, comprising computer program instructions, wherein when the computer program instructions are executed by a computing device cluster, the computing device cluster performs the method according to any one of claims 1 to 9.
